# EUROPEAN PATENT APPLICATION

(11) **EP 2 403 243 A1**
(43) Date of publication of application: **04.01.2012**
(21) Application number: 10290357.2
(22) Date of filing: 30.06.2010
(51) Int. Cl.: H04N 7/16, H04N 7/173, H04N 7/00

(54) **Mechanism for inserting display content in IPTV**

(71) Applicant: Alcatel Lucent, 75007 Paris (FR)
(72) Inventor: Gopalarathnam, Sambasivan, 600053 Chennai (IN); Karthick, Rajapandiyan, 600044 Chennai, Tamil Nadu (IN)
(74) Representative: Sciaux, Edmond

(57) **Abstract**

Mechanism for inserting display content in a channel is disclosed. The present invention relates to Internet Protocol Television and, more particularly, to inserting display content s in IP TV. Present day IP TV services allow the service providers to insert display content to a channel, but they do not guarantee that the content is watched by the users. The disclosed method facilitates a service provider to insert the display content for display to users in any one of the scenarios such as, when a user changes a channel, or switches on his television or is watching a particular channel for more than a pre-configured time and so on. After the display content is watched, the actual channel content may be streamed to the user. The method ensures that users watch the display content and thus the purpose of the display content is served.

## Description

### TECHNICAL FIELD

The present invention relates to Internet Protocol Television and, more particularly, to inserting display content in IP TV.

### BACKGROUND

Internet protocol (IP) Television offers different services to users such as on demand services, electronic program guide, live recording, streaming of advertisements by the content providers and the like. Viewers generally tend to ignore the advertisements that are displayed on the channels while watching a program or viewing a movie on a channel. They either switch to another channel or may prefer to engage themselves in some other activity until the advertisement is completed. As a result, the purpose of the advertisement is not served. In some instances, it is possible that some governmental organizations may want to insert some display content to be must watched for the benefit of the users such as content for creating awareness on some epidemic diseases, advertisement content on vaccination and so on. In another instance, a local enterprise may want to display advertisements on their products and the like. In such scenarios, it is always possible that users viewing the channel may not be interested in watching the display content/advertisement content, streamed along with program's provided by content provider and thus, the purpose of the display content is not served.

In addition, the network operators may also not be interested in displaying the advertisements as viewers will not be interested in watching the advertisements and, thereby, affecting the revenues of network operators. At present, there is no mechanism that would make a user watch such advertisements or display content either by offering special incentives or discounts on the service. Offering incentives ensures that users watch the display content. Further, present systems do not have any mechanisms to record the statistics of number of times the display content is viewed by the user and inform the network operator about the same. In addition, there are no mechanisms for the network operator to determine the popularity of the display content and offer some incentives to the users to opt to see the display content on their television. Due to the above drawbacks present day mechanisms do not ensure that the purpose of the display content is served. Further, users and network operators are also not satisfied.

### SUMMARY

In view of the foregoing, an embodiment herein provides a digital subscriber line access module for inserting display content in an Internet Protocol network. The module configured with at least one means adapted for checking if a user is performing a pre-defined action, sending the display content to the user if the user has performed the pre-defined action and streaming channel content to the user only after display of the display content. The digital subscriber line access module is configured for checking if the user is performing the action where the action is one of switching on the television for the first time and changing channel after a period of time. The digital subscriber line access module is further configured to determine if the user has allowed for the display content to be inserted by checking the user profile with a service provider. The digital subscriber line access is further configured to insert the display content wherein the display content refers to one of advertisements, content, text, image and combination of the same.

Embodiments further disclose a digital subscriber line access module for inserting display content in an Internet Protocol network. The module configured with at least one means adapted for checking if a user is watching a channel for a pre-configured time, checking if the user is trying to change the channel after the pre-configured time, sending the display content to the user, if the pre-configured time has elapsed and streaming channel content to the user only after display of the display content, when user want to join the channel again. The digital subscriber line access module is further configured to check if the user is watching the channel for pre-configured time where the time is configured by a service provider. The digital subscriber line access module is further configured to determine if the user has allowed for inserting the display content by checking the user profile with a service provider. The digital subscriber line access module is further configured to insert the display content wherein the display content is at least one of advertisements, text, image and combination of the same.

Embodiments herein also disclose a content provider module for streaming the actual channel content in an Internet Protocol television network. The Content provider configured with at least one means adapted for receiving an indication of a pre-defined action performed by a user from a digital subscriber access module, sending the actual channel content to the digital subscriber access module and streaming channel content to the user after the display content is inserted by the digital subscriber access module. The content provider is configured to receive an indication of the pre-defined action where the per-defined action is one of the users trying to join a channel and switching another channel.

Also, disclosed herein is a method for inserting display content in an internet protocol television network. The network comprising a plurality of digital subscriber line access modules, at least one content provider, a routing gateway, a border service router, a switch, plurality of users, further the method comprising checking by the digital subscriber line access module if the user is performing a pre-defined action, sending the display content by the digital subscriber access module to the user and streaming actual channel content by the digital subscriber access module obtained from content provider to the user after the display content is displayed. The action is one of switching on the television for the first time and changing the channel. The method wherein the method is further adapted for sending the display content wherein the display content refers to one of advertisements, text, images and combination of the same. The method wherein the method is further adapted for determining if the user has allowed inserting the display content by checking the user's profile with a service provider.

Also, disclosed herein is a method for inserting display content in an internet protocol network. The method comprising a plurality of digital subscriber line access modules, at least one content provider, a routing gateway, a border service router, a switch, plurality of users, further the method comprising determining by the digital subscriber line access module if the user watched a channel previously for a pre-configured time, determining if the user is trying to change the channel after the pre-configured time, sending by the digital subscriber line access module the display content to the user if the pre-configured time is elapsed and streaming the channel content to the user only after the display content is displayed. The method is further adapted for determining if the user is watching the channel for pre-configured time where the time is pre-configured by a service provider. The method is further adapted for determining if the user has allowed inserting the display content by checking the user's profile with service provider. The method is further adapted for sending the display content wherein the display content refers to one of advertisements, text, images and combination of the same.

These and other aspects of the embodiments herein will be better appreciated and understood when considered in conjunction with the following description and the accompanying drawings.

### BRIEF DESCRIPTION OF THE FIGURES

The embodiments herein will be better understood from the following detailed description with reference to the drawings, in which:

FIG. 1 illustrates a IP network components, according to an embodiment as disclosed herein;

FIG. 2 depicts a digital Subscriber line Access Module (DSLAM), according to an embodiment as disclosed herein;

FIG. 3 depicts a content provider, according to an embodiment as disclosed herein;

FIG. 4 is a flow chart depicting the process of inserting display content when a user switches on his STB, according to an embodiment as disclosed herein;

FIG. 5 is a flow chart depicting the process of inserting display content when user is changing channel, according to an embodiment as disclosed herein; and

FIG. 6 is a flow chart depicting the process of inserting display content after pre-defined intervals, according to an embodiment as disclosed herein.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

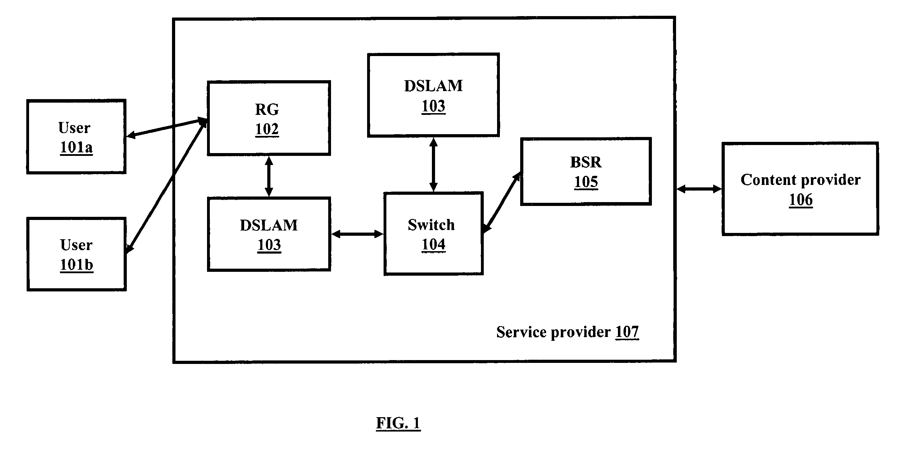

The embodiments herein disclose a mechanism for inserting display content into a channel by providing systems and methods therefore. Referring now to the drawings, and more particularly to FIGS. 1 through 6, where similar reference characters denote corresponding features consistently throughout the figures, there are shown embodiments.

A system and method for inserting display content in a channel is disclosed. The method facilitates a user who is using IP TV service in order to allow a service provider to insert display content after a time interval of a user joining a channel or user switching for a particular channel. In an embodiment, the display content may comprise of text messages, images, advertisements or a combination of the same. A government agency may want to insert special display content that may be a message for viewers to create awareness on certain issues. Further, a local manufacturer may want to insert an advertisement on his product before the actual channel content so that it is viewed by the users. In all such cases, they may contact a service provider in order to insert the display content. Further, the service provider may configured its network elements to insert the display content for display to users in any one of the scenarios such as, when a user changes a channel, or switches on his television or switching again to a particular channel after a pre-configured time and so on. When a user satisfies any of the above scenarios, the Network/Service provider module inserts the display content, and the display content is sent to the user. After the display content is displayed, the channel content may be streamed to the user. In an embodiment, the channel content may be video, audio, combination or the like. The method ensures that users watch the display content and thus the purpose of the display content is served.

FIG. 1 illustrates IP network components, according to an embodiment as disclosed herein. The system comprises a plurality of users 101a, 101b, a service provider 107, at least one content provider module 106.

The users 101a, 101b may be a viewer of the IP TV. The user 101a, 101b may be employing a Set Top Box (STB) in order to access the IP TV. At the user 101a, 101b, end, the channel may be viewed on a television or a computer that has access to the IP TV service. In an embodiment, the user may be required to make a registration with the service provider 107 for streaming the display content to the user 101a, 101b. Further, the user 101a, 101b may be offered some incentives on permitting the display of the display contents on his channel.

The service provider 107 houses all the network components within it. The service provider 107 also inserts the display content to the user 101 for display. The service provider 107 knows about the users 101 who had blocked the display of the display content so that the display content is not streamed to such users 101. In an embodiment, the service provider may be Tata Sky, Sun Direct, Airtel or the like who offer channel services to the user 101. The service provider 107 further comprises of the network components such as a routing gateway 102, a plurality of Digital Subscriber Line Access Module (DSLAM) 103, a switch 104 and a Border Service Router (BSR) 105.

The routing gateway 102 is a residential gateway that resides in the vicinity of the user's television or computer. The routing gateway 102 may be a modem like device that routes display content and channel content to and from the user's television to the DSLAM 103 or some other network module. The routing gateway 102 is configured for decoding the control signals from the network modules and performing required actions. The routing gateway 102 decodes the display content received from the content provider module 107 through the network elements and sends the display content to appropriate user 101 who is watching the channel.

The DSLAM 103 is a network module that acts as intermediate for routing the requests from the user 101 1 to the content provider module 106. A plurality of routing gateways 102 may be connected to the DSLAM 103. The request may be for providing channel content and so on. When the DSLAM 103 receives a request for channel content from a particular user 101, the DSLAM 103 stores the channel request and sends a proxy response i.e. mandatory display content to the user 101. Further, the DSLAM 103 is configured to identify users 101 for the service by checking for the service subscription information stored on it. The DSLAM 103 may also inform the BSR 105 of the user's request for the channel. Once the display content is viewed, the DSLAM will stream the channel content 106 to the user.

The switch 104 acts as an intermediate network component for routing the requests or streaming channel content between the DSLAM 103 and the content provider module 106. A plurality of DSLAMs 103 may be connected the switch 104.

The Border Service Router (BSR) 105 is responsible for receiving requests and responses from network components such as a switch 104, DSLAM 103 or the like. The BSR 105 may route the requests to the appropriate content provider module 106. In an embodiment, the BSR 105 may also take up the function of routing the response to the user 101 without the DSLAM 103. Further, the BSR 105 may also be configured to store details of users 101 i.e., channel requests and the like. In an embodiment, the BSR 105 may be configured to identify the users 101 who have blocked the display content display and ensure that the display content is not routed to such users 101.

The content provider module 106 works on the instructions of the service provider 107. In an example, the content providers 106 may be different channels such as ESPN, Star Sports, UTV, Sun TV, HBO and the like.

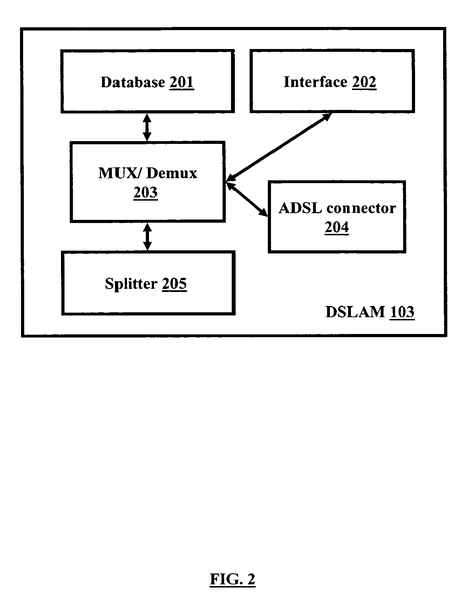

FIG. 2 depicts a digital Subscriber line Access Module (DSLAM), according to an embodiment as disclosed herein. The DSLAM 103 is a network module that is responsible for storing details of every user 101. The DSLAM 103 receives channel request from the user 101 and inserts a proxy response for the mandatory display content and sends the display content to the user 101. Once the display content is streamed, the DSLAM 103 may then route the actual channel to the user 101. In case if the user 101 has unsubscribed for the mandatory display content, the DSLAM 103 may stream only the requested channel to the users 101. The DSLAM 103 comprises of database 201, interface 202, Mux/Demux 203, ADSL connector 204 and splitter 205.

The database 201 is responsible for maintaining profile details of the user 101. Details such as services for which the user 101 is subscribed and the like may be stored on the database 201. In an embodiment, when a user 101 sends a request for a channel, then request is sent to the DSLAM 103. In the DSLAM 103, the details of the user like the user ID and the channel for which the request is made may be stored in the database 201. For example, say a user 101 requests for Star World and the channel ID is 230.1.1.1. The database 201 may store the channel ID: 230.1.1.1 against the user ID i.e., 1/1/4/20 and also the targeted advertisement/display content for the user. Further, the database may send the display content to the appropriate user 101.

The interface 202 acts as a means for the interaction between the DSLAM 103 with other modules of the network. It is through the interface 202 that the DSLAM 103 receives and sends requests and responses to other network modules.

The Mux/Demux 203 are configured for multiplexing and demultiplexing the request or responses handled by the DSLAM 103. Since, the DSLAM 103 may receive requests from multiple users 101 for different channel content, the requests need to be routed appropriately; Mux/Demux 203 ensures that the received requests are routed to the appropriate destinations. The Mux/Demux 203 may also assign priority to users 101 to be served and may service the users 101 based on the assigned priority.

The ADSL connector 204 enables ADSL connection to the DSLAM 103. The splitter 205 is responsible for providing access to the same line at the same time without any interference or attenuation. The splitter 205 ensures that a single line may be employed for ADSL service and calls (voice calls) at the same time and eliminates any attenuation. In an embodiment, a micro filter may also be employed in place of the splitter 205.

DSLAM 103 informs the charging functions for offering discounts to the user depending on the number of times the user 101 views the display content.

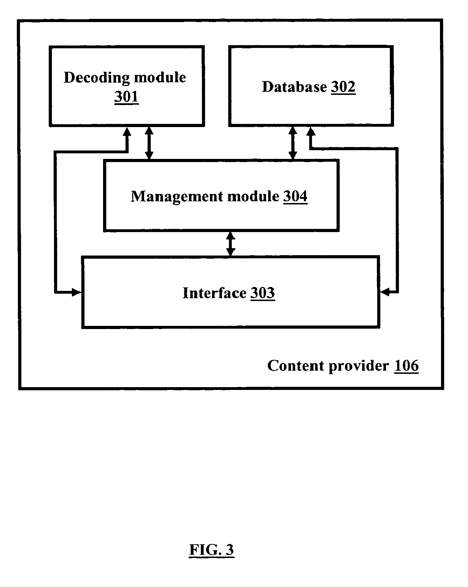

FIG. 3 depicts a content provider, according to an embodiment as disclosed herein. The content provider module 106 ensures that the channel content is routed to the user 101 through BSR 105 and DSLAM 103. Then, the DSLAM 103 streams the channel content to be displayed at the user's television or computer. The content provider module 106 comprises a decoding module 301, a database 303, a management module 303 and an interface 304. The content provider module 106 may also include various other modules in addition to the modules depicted in the embodiment herein.

The decoding module 301 is responsible for receiving request from the user 101 such as request for streaming a channel and decoding the request to identify the user (user ID) who sent the request. The decoding module 301 may also map the user 101 request to the channel ID so that the display content is routed to appropriate channel. On receiving the request for channel content from the BSR 105 or the DSLAM 103, the decoding module 301 identifies the channel.

The database 302 is configured for storing information of every user 101. The database 302 may store details as to which user has requested for which channel. In an example, say user 101 a has requested for ESPN, another user 101b has requested for a music channel, the requests and details of the user may be stored separately on the database 302.

The interface 303 acts as a means for interaction of the content provider module 106 with external network components such as DSLAM 103 switch 104, BSR 105 and the like. All requests and responses are routed through the interface 303 to various other components. The requests may be requests for streaming selected channel or the like.

The management module 304 is responsible for the functioning of the content provider module 106. All modules of the content provider module 106 function under the control of the management module 304. The management module 304 may issue different control signals for removal of the content from the channel, for sending responses to the user 101 or for streaming the channels after removal of the content from the channels. The management module 304 is also responsible for routing request to appropriate modules that address the request within the content provider module 106.

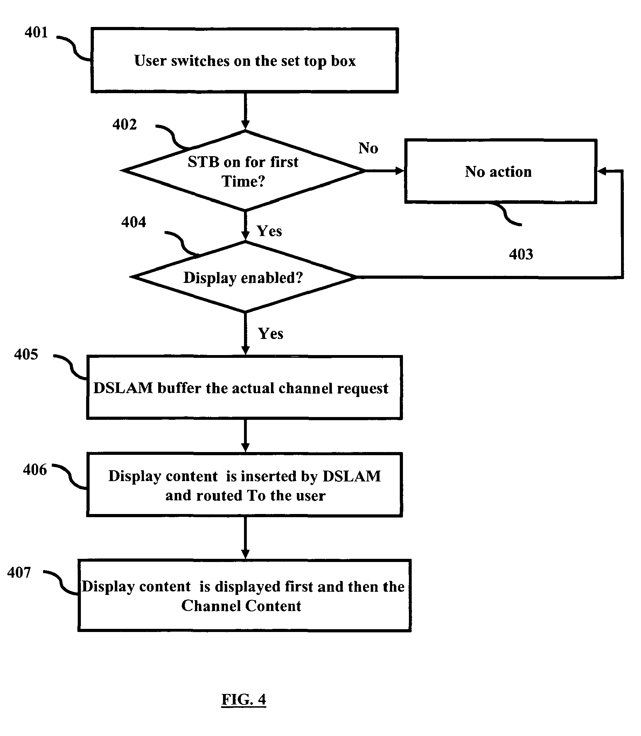

FIG. 4 is a flow chart depicting the process of inserting display content when a user switches on his STB, according to an embodiment as disclosed herein. Consider a case where a user 101 switches (401) on his television and powers on his STB. As soon as the user 101 powers on his STB, a signal is sent to the RG 102 informing the RG 102 that user has switched on his STB. The RG 102 then informs the DSLAM 103 regarding the same. The DSLAM 103 makes (402) a check if the STB is switched on for the first time after its last power off. In case, the STB is not powered on for the first time at that instant, no action is performed (403). On the other hand, if the STB is switched on after a long time the DSLAM 103 checks (404) if the mandatory display content is enabled for the user 101. If the display content is enabled to the user 101, then the DSLAM 103 buffers (405) the actual channel request and inserts a proxy join response for the display content and sends the proxy join response to the user 101. If the display content is not enabled, the process moves to step 403. The DSLAM 103 then inserts (406) the display content before the actual channel content to the channel for which the user 101 has tuned to. At the user 101 end, the display content may be displayed (407) on the TV or computer of the user 101. Once the display content is displayed, the actual channel content may be streamed to the user 101. The method thus ensures that the user 101 watches the display content that is sent. In an embodiment, the user 101 may also be offered some special discounts or incentives by the service provider for watching such display contents. In an example, say the user 101 may be offered a 10% discount on his monthly subscription for watching the inserted display content/ advertisement service before the actual channel content and the like. The various actions in method 400 may be performed in the order presented, in a different order or simultaneously. Further, in some embodiments, some actions listed in FIG. 4 may be omitted.

In an embodiment, the user 101 may also be required to register for the display of the display content before the actual channel content, by registering for the service with a service provider 107. The service provider 107 may store the details of the user 101 at the DSLAM 103. Further, the DSLAM 103 streams display content before actual channel content only to the users 101 who register for the service.

In an embodiment, the service provider 106 may also track the number of times the user 101 watches the display content and may offer special schemes for the user 101 1 as a part of the channel subscription charges.

In an embodiment, a user 101 who is not interested in watching the display content may opt to block the display of the display content by informing the service provider 107 of the same.

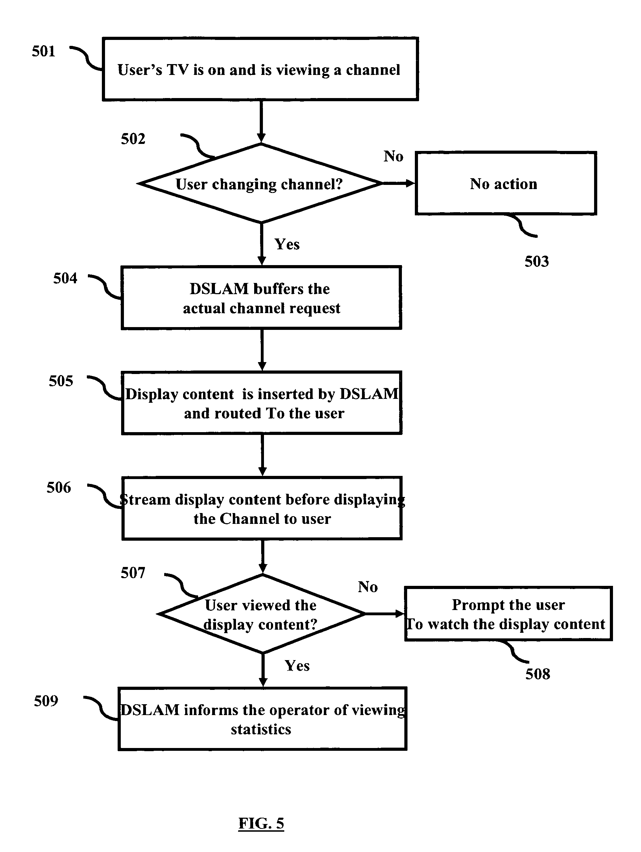

FIG. 5 is a flow chart depicting the process of inserting display content when user is changing channel, according to an embodiment as disclosed herein. Consider the case wherein a user 101a is viewing (501) a channel on his television. The user 101a may wish to change the channel and watch a different channel. The DSLAM makes a check (502) if the user 101a is trying to make a request for a new channel. The request may be sent in the form of an IGMP join request. If there is no request from the user 101a for changing the channel, then no action is performed (503). On the other hand, if there is an indication that the user 101a has requested for another channel, the DSLAM buffers (504) the actual channel request by the user 101. DSLAM 103 decodes the request and identifies the user (user ID) who is making the request and the channel ID for which the request is made. The DSLAM 103 then inserts (505) the display content and sends the display content to the user 101 for display. The display content is displayed (506) at the user 101a end before the requested channel content. A check may be made (507) if the user 101a has viewed the display content. If the user 101a has not viewed the display content, the DSLAM 103 may prompt (508) the user 101a to view the display content. In an embodiment, the DSLAM 103 may also inform (509) the operator of the statistics of the display content such as the number of times the display content is viewed by the user 101a or the like so that the user 101a may be offered discounts or incentives for watching the display content. The various actions in method 500 may be performed in the order presented, in a different order or simultaneously. Further, in some embodiments, some actions listed in FIG. 5 may be omitted.

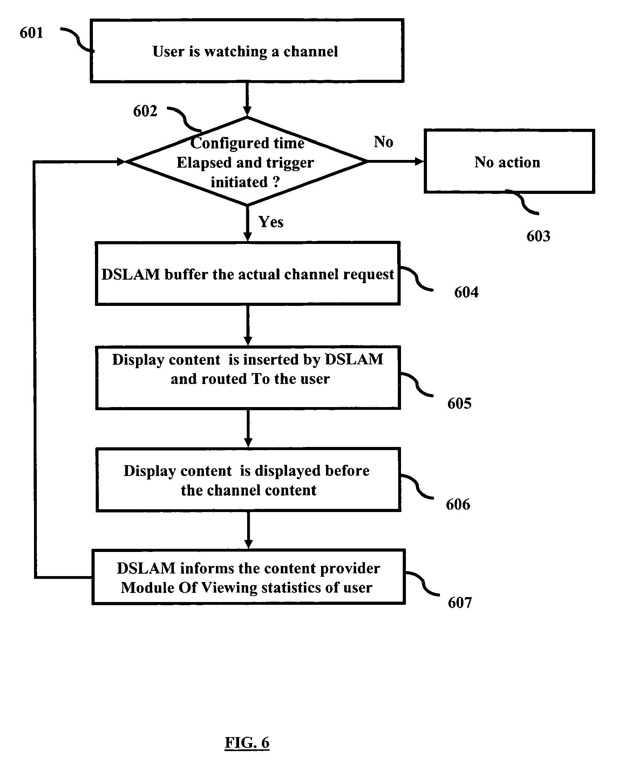

FIG. 6 is a flow chart depicting the process of inserting display content after definite intervals, according to an embodiment as disclosed herein. Consider a case where a user 101b is watching (601) a channel on his television or computer. The user 101b may have been watching a movie on the channel past an hour. The DSLAM 103 is configured to monitor the pre-defined actions of the user 101b and hence the DSLAM 103 keeps a check on the viewing details of the user 101b. The DSLAM 103 determines that the user 101b has been watching the same channel past an hour. The DSLAM 103 makes (602) a check if the pre-configured time for the channel has elapsed and the user 101b is trying to trigger another channel. The pre-configured time determines the time intervals when the display content may be inserted when another channel request is triggered by a user 101. In an embodiment, the time interval may be configured as display the display content every half an hour, every 40 minutes or every hour and the like depending on the service provider 107. In case the pre-configured time has not elapsed, then no action is performed (603). On the other hand, if the pre-configured time has elapsed and the user is triggering to switch a channel, then the DSLAM 103 buffers (604) the actual request from the user 101. The DSLAM 103 then sends (605) the Advertisement content to the user 101b. At the user 101b end, the display content is displayed (606) on the television or the computer of the user 101b. Once the display content is displayed, the DSLAM 103 streams the channel content to the user 101b. DSLAM 103 may also inform (607) the service provider 107 of the viewing statistics of the user 101b. The viewing statistics may include details such as the number of times the user 101b preferred to watch the display content and the like. These statistics may be employed by the service provider 107 in order to offer incentives to the user 101b. In an embodiment, the whole process may be repeated and the step may move to 602. The various actions in method 600 may be performed in the order presented, in a different order or simultaneously. Further, in some embodiments, some actions listed in FIG. 6 may be omitted.

In an embodiment, the user 101 may choose to stop the display of the display content at anytime as per his preference. In an example, a user 101 may have watched the display content twice in a span of 2 hours of him watching a channel. The user 101 may then prefer to stop the display of the display content further and hence he sends a request to the service provider 107 to stop the display of the display content.

The embodiments disclosed herein can be implemented through at least one software program running on at least one hardware device and performing network management functions to control the network elements. The network elements shown in Fig. 1, 2 and 3 include blocks which can be at least one of a hardware device, or a combination of hardware device and software module.

The embodiment disclosed herein specifies a system for inserting display content in an IP TV. The method allows a service provider to insert display content before a channel watched by the user by providing a system thereof. Therefore, it is understood that the scope of the protection is extended to such a program and in addition to a computer readable means having a message content therein, such computer readable storage means contain program code means for implementation of one or more steps of the method, when the program runs on a server or mobile device or any suitable programmable device. The hardware device can be any kind of device which can be programmed including e.g. any kind of computer like a server or a personal computer, or the like, or any combination thereof, e.g. one processor and two FPGAs. The device may also include means which could be e.g. hardware means like e.g. an ASIC, or a combination of hardware and software means, e.g. an ASIC and an FPGA, or at least one microprocessor and at least one memory with software modules located therein. Thus, the means are at least one hardware means and/or at least one software means. The method embodiments described herein could be implemented in pure hardware or partly in hardware and partly in software. The device may also include only software means. Alternatively, the invention may be implemented on different hardware devices, e.g. using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the claims as described herein.

## Claims

1. A digital subscriber line access module for inserting display content in an Internet Protocol network, said module configured with at least one means adapted for
checking if a user is performing a pre-defined action;
sending said display content to said user if said user has performed said pre-defined action; and
streaming channel content to said user after display of said display content.

2. The digital subscriber line access module as in claim 1, wherein said module is configured for checking if said user is performing said action where said action is one of
switching on the television for the first time; and
changing channel.

3. The digital subscriber line access module as in claim 1, wherein said module is further configured to determine if said user has allowed for said display content to be inserted by checking said user profile with a service provider.

4. The digital subscriber line access module as in claim 1, wherein said module is further configured to insert said display content wherein said display content refers to one of advertisements, content, text, image and combination of the same.

5. A digital subscriber line access module for inserting display content in an Internet Protocol network, said module configured with at least one means adapted for
checking if a user is watching a channel for a pre-configured time;
checking if said user is trying to switch to another channel after said pre-configured time;
sending said display content to said user, if said pre-configured time has elapsed and said user is trying to switch to said channel; and
streaming channel content to said user after display of said display content.

6. The digital subscriber line access module as in claim 5, wherein said module is further configured to determine if said user has allowed for inserting said display content by checking said user profile with a service provider.

7. The digital subscriber line access module as in claim 5, wherein said module is further configured to insert said display content wherein said display content is at least one of advertisements, text, image and combination of the same.

8. A content provider module for inserting channel content in an Internet Protocol network, said provider configured with at least one means adapted for
receiving an indication of a pre-defined action performed by a user from a digital subscriber access module;
sending said channel content to said digital subscriber line access module through a broadband service router; and
streaming channel content to said user through said digital subscriber line access module after said display content is inserted by the said digital subscriber line access module.

9. The content provider module as in claim 8, wherein said content provider is configured to receive an indication of said pre-defined action where said per-defined action is one of
said user trying to join a channel; and
switching another channel.

10. A method for inserting display content in an internet protocol network, said network comprising a plurality of digital subscriber line access modules, at least one content provider, a routing gateway, a border service router, a switch, plurality of users, further said method comprising
checking by said digital subscriber line access module if said user is performing a pre-defined action;
sending said display content by said digital subscriber line access module to said user; and
streaming channel content by said digital subscriber line access module to said user after said display content is displayed.

11. The method as in claim 14, wherein said action is one of
switching on the television for the first time; and
changing the channel.

12. The method as in claim 14, wherein said method is further adapted for sending said display content wherein said display content refers to one of advertisements, text, images and combination of the same.

13. The method as in claim 14, wherein said method is further adapted for determining if said user has allowed inserting said display content by checking said user's profile with a service provider.

14. A method for inserting display content in an internet protocol network, said method comprising a plurality of digital subscriber line access modules, at least one content provider, a routing gateway, a border service router, a switch, plurality of users, further said method comprising
determining by said digital subscriber line access module if said user is watching a channel for a pre-configured time;
determining by said digital subscriber line access module if said user is switching the channel after the elapse of pre-configured time,
sending by said digital subscriber line access module said display content to said user if said pre-configured time is elapsed; and
streaming by said digital subscriber line access module said channel content to said user after said display content is displayed.

15. The method as in claim 14, wherein said method is further adapted for determining if said user has allowed inserting said display content by checking said user's profile with service provider.

16. The method as in claim 14, wherein said method is further adapted for sending said display content wherein said display content refers to one of advertisements, text, images and combination of the same.
